# EUROPEAN PATENT APPLICATION

(11) **EP 1 495 676 A1**
(43) Date of publication of application: **12.01.2005**
(21) Application number: 04003119.7
(22) Date of filing: 12.02.2004
(51) Int. Cl.: A01K 81/06, A01K 89/02

(54) **Reel**

(30) Priority: 11.07.2003 IT GE20030017
(71) Applicant: HTM SPORT S.p.A., 16035 Rapallo (Genova) (IT)
(72) Inventor: Ragusa, Roberto, 16035 Rapallo (IT)
(74) Representative: Porsia, Attilio, Dr.

(57) **Abstract**

Reel for underwater fishing gun, comprising a spool (1) on which the line is wound, with means (101) for recovering the said line, means (2,102) for supporting the said spool on the barrel (10) of the underwater gun, the said spool (1) rotating relative to an axis perpendicular to the longitudinal axis of the barrel (10) of the said gun, and friction means (3,4) for the control and adjustment of line release; the said friction means (3,4) are located in the said reel at the opposite end of the spool (1) from the said line recovery means (101).

## Description

The present invention relates to a reel for recovering the line, and the shaft connected to it, for underwater fishing guns.

Normally, in most underwater fishing guns, the length of the line connecting the shaft of the spear, carrying the harpoon, to the gun is equal to two or three times the length of the shaft. This is due to the fact that the range of the gun is rarely more than that length. However, when fishing for large prey, the diver must take account of the mobility and strength of the struck prey, and therefore needs more time and hence a much greater quantity of line.

For this purpose, a number of guns are equipped with reels in which the line is wound, enabling the line to be wound up when the prey is captured. These reels are mounted on the tubular body of the gun and have an axis of rotation perpendicular to that of its body. To control the speed of release of the line, once the shot has been fired, the reel has a friction clutch comprising a disk with a high coefficient of friction, acting on the drum of the reel, and adjustable, manually controllable disk pressure means.

The friction clutch of the reel is usually positioned on the same end of the drum of the reel as the crank, the crank being used to recover the line. This location is rather inconvenient because it can cause interference with the diver's hand during recovery. Moreover, when it is remembered that the friction clutch has to be operated and adjusted shortly after having fired the spear, this position seems less than ideal from the point of view of quick access.

It is therefore an object of the present invention to provide a reel for an underwater fishing gun in which the friction clutch is easy to operate and does not cause problems when recovering the line.

The subject of the present invention is therefore a reel for an underwater fishing gun, comprising a spool on which the line is wound, with means for recovering the said line, means for supporting the said spool on the barrel of the underwater gun, the said spool rotating relative to an axis perpendicular to the longitudinal axis of the barrel of the said gun, and friction means for the control and adjustment of line release; the said friction means being located in the said reel at the opposite end from the said line recovery means. The friction means may comprise an antislip washer and means for placing the said washer in contact with the surface of the said spool.

In one embodiment, the said spool rotates on a spindle projecting from the said support means. There is formed on the end of the said spindle adjacent to the said support means a thread onto which is screwed a nut, coaxial with the said spool, provided with a plurality of radial lobes projecting beyond the diameter of the said spool, and an antislip washer is placed between the said nut and the said spool.

Other advantages and features of the device according to the present invention will become clear in the course of the following detailed description of one embodiment thereof, presented by way of non-limiting example, with reference to the attached sheets of drawings, in which:
Figure 1 is an exploded perspective view of the reel according to the present invention;
Figure 2 is an end elevation view of the reel of Figure 1; and
Figure 3 is a view in section taken on the line III-III of Figure 2.

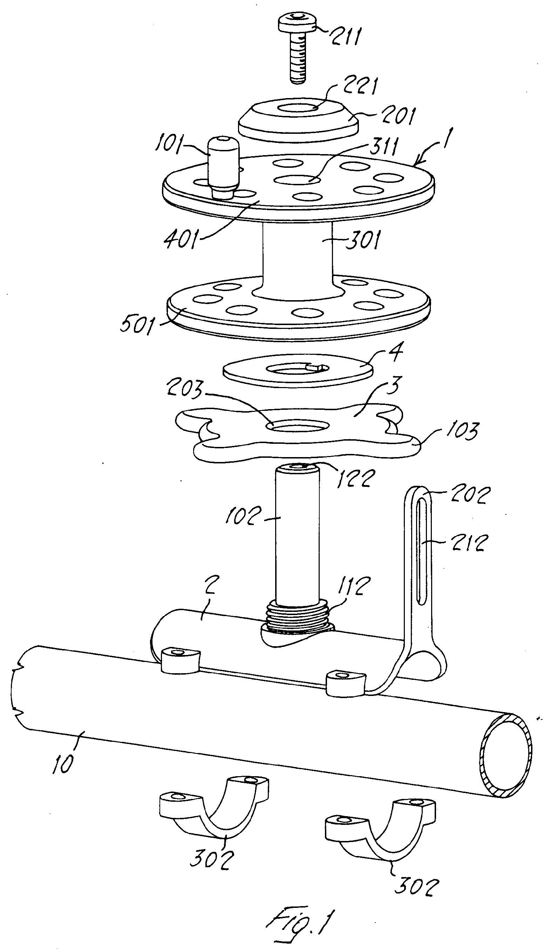

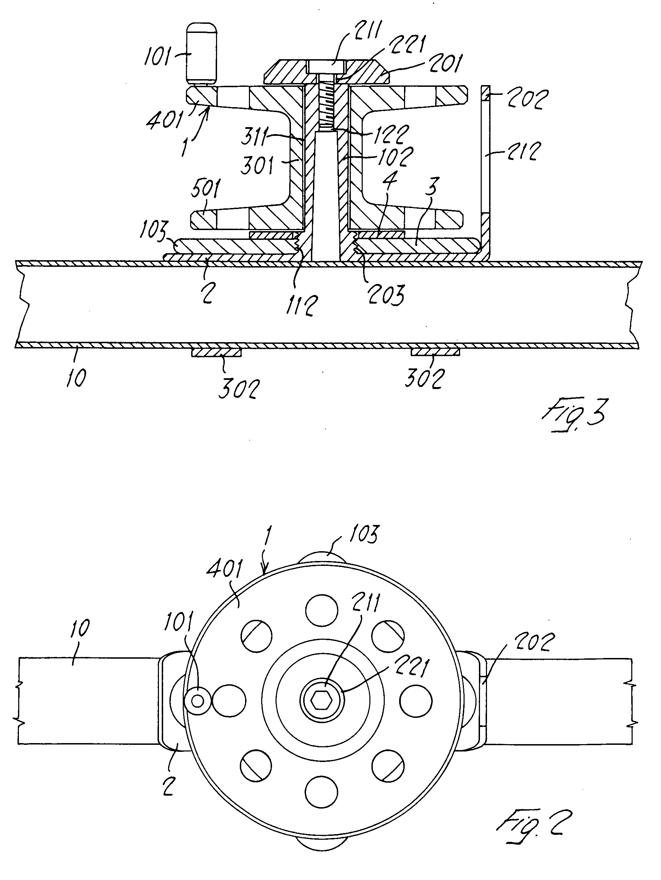

Figure 1 illustrates in exploded perspective the reel according to the present invention. Reference 1 denotes the spool on which the line (not shown in the figure) is wound. The spool comprises a tubular core 301 with an axial cavity 311. At the two ends of the core 301 are two circular plates 401 and 501 and the crank 101 is located on the plate 401. The spool is connected to the barrel 10 of the gun via the support 2, which possesses a spindle 102 projecting from the said support and containing an axial hole 122 for the screw 211, which passes through the hole 221 in the cap 201. The spindle also has, at the end connected to the support 2, a portion 112 where the lateral surface is threaded. Inserted between the support and the plate 501 of the spool 1 are the antislip washer 4 and the nut 3, the latter being provided with the axial hole 203 and with the radial lobes 103 which project beyond the outer edge of the plate 501 (see Figures 2 and 3). The support 2 is fixed to the barrel 10 by the brackets 302 and suitable means connecting the said brackets 302 to the said support 2. The said support 2 is also provided with a guide 202 containing a slot 212 for the spear line.

Figure 2 illustrates the reel according to the invention in end elevation, with the same numbers used for the same parts. The figure shows clearly that the lobes 103 of the nut 3 project beyond the outer edge of the plates 401 and 501.

The cross section in Figure 3 meanwhile helps explain more clearly on the one hand the position of the spool 1 with the core 301 sitting on the spindle 102 and the screw 211 which fits into the hole 122 of the spindle 102 to clamp the cap 201; while at the same time the positions of the antislip washer 4 and nut 3 are clearer, their threaded axial hole 203 engaging with the threaded portion 112 of the spindle 102.

The operation of the reel according to the present invention will be clear from the following account. When the spear is fired from the gun, the diver must, once the prey has been struck, control the speed at which the line is unwound from the spool 1. To achieve this result he acts on one of the lobes 103 of the nut 3 so that the nut 3 rises up the thread 112 of the spindle 102 towards the spool 1 and pushes the antislip washer 4 against the outer face of the plate 501 of the spool 1. In this way the rotation of the spool 1 about the spindle 102 will be retarded, and the higher the nut 3 is raised towards the spool, the slower the line round about it will be paid out.

The position of the friction means used in the reel according to the present invention enables the least possible interference of the hands of the diver with the rotation of the spool 1, and therefore improves both the accessibility and safety of the operation. Also, when the line is being recovered, the plate 401 of the spool 1 on which the crank 101 is mounted is not encumbered in any way, so the diver can easily turn the crank 101 in order to recover the line.

Advantageously, the thread 112 on the spindle 102 and the corresponding thread 203 on the nut 3 are produced in such a way that the nut 3 advances towards the spool 1 when rotated in the opposite direction to the direction of line recovery. In this way, when the diver begins to recover the line by turning the crank 101, the friction clutch is released largely automatically, the nut being largely separated from the spool 1 by the effect of the rotation imparted to the spool 1.

In the embodiment illustrated, the friction means consist of the nut 3 pushing the washer 4 into contact with the plate 501 of the spool 1; however, in a similar way an effective result can be achieved by producing the said washer and nut integrally with each other, i.e. forming an antislip surface on the face of the nut adjacent to the spool plate 501.

The reel according to the present invention can be fixed to the barrel 10 of the gun in different positions, depending on however the diver finds it most comfortable to use it; usually it will be positioned on a plane essentially parallel to the plane of the hand grip of the gun, although it is perfectly possible for it to be positioned on a plane perpendicular to this plane of the hand grip.

## Claims

1. Reel for underwater fishing gun, comprising a spool (1) on which the line is wound, with means (101) for recovering the said line, means (2, 102) for supporting the said spool on the barrel (10) of the underwater gun, the said spool (1) rotating relative to an axis perpendicular to the longitudinal axis of the barrel (10) of the said gun, and friction means (3, 4) for the control and adjustment of line release, which reel is **characterized in that** the said friction means (3, 4) are located in the said reel at the opposite end of the spool (1) from the said line recovery means (101).

2. Reel according to Claim 1, in which the said spool (1) rotates on a spindle (102) projecting from the said support means (2), the said friction means comprising an antislip washer (4) mounted on the said spindle, and means (3) for placing the said washer in contact with the surface (501) of the said spool (1).

3. Reel according to Claim 2, in which there is formed on the end of the said spindle (102) adjacent to the said support means (2) a thread (112), onto which is screwed a nut (3) with a threaded axial hole (203) and with a plurality of radial lobes (103) projecting beyond the outer edge of the said spool (1), an antislip washer (4) being placed between the said nut and the said spool (1).

4. Reel according to Claim 3, in which the said nut (3) and the said washer (4) are produced integrally with each other.

5. Reel according to Claim 3 or 4, in which the thread (112) on the spindle (102) and the corresponding thread (203) on the nut (3) are produced in such a way that the nut (3) advances towards the spool (1) when rotated in the opposite direction to the direction of line recovery.
